(19) **Europäisches Patentamt European Patent Office Office européen des brevets**

(11) **EP 4 503 361 A1**

(12) **EUROPÄISCHE PATENTANMELDUNG**

(43) Veröffentlichungstag:
05.02.2025  Patentblatt 2025/06

(21) Anmeldenummer: 23200444.0

(22) Anmeldetag: **28.09.2023**

(51) Internationale Patentklassifikation (IPC):
*H02H 3/08* (2006.01)   *H01H 9/54* (2006.01)
*H01H 9/56* (2006.01)   *H02H 5/04* (2006.01)
*H02H 7/22* (2006.01)

(52) Gemeinsame Patentklassifikation (CPC):
H02H 3/08; H01H 9/548; H01H 9/56; H02H 5/04;
H02H 7/222

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität:  **02.08.2023  DE 102023207405**

(71) Anmelder: **Siemens Aktiengesellschaft**
**80333 München (DE)**

(72) Erfinder: **Tannhäuser, Marvin**
**91353 Hausen (DE)**

(74) Vertreter: **Siemens Patent Attorneys**
**Postfach 22 16 34**
**80506 München (DE)**

(54)  **SCHUTZSCHALTGERÄT UND VERFAHREN**

(57)    Die Erfindung betrifft ein Schutzschaltgerät zum Schutz eines elektrischen Niederspannungsstromkreises aufweisend:
- eine mechanische Trennkontakteinheit, die in Serie mit einer elektronischen Unterbrechungseinheit geschaltet ist, wobei die Serienschaltung einerseits mit mindestens einem netzseitigen und andererseits mit mindestens einem lastseitigen Anschluss verbunden ist,
- dass die Höhe des Stromes des Niederspannungsstromkreises ermittelt wird,
- dass bei Überschreitung von Strom- oder/und Strom-Zeitgrenzwerten eine Vermeidung eines Stromflusses des Niederspannungsstromkreises initiiert wird,
- dass die Temperatur an Anschlussklemmen des Schutzschaltgerätes ermittelt wird,
- dass bei Überschreitung eines ersten Temperaturschwellwertes die elektronischen Unterbrechungseinheit in einen hochohmigen Zustand der Schaltelemente zur Vermeidung eines Stromflusses geschaltet wird, um eine Überhitzung der Anschlussklemmen des Schutzschaltgerätes zu vermeiden.

FIG 1A

EP 4 503 361 A1

# FIG 1B

## Beschreibung

Die Erfindung betrifft das technische Gebiet eines Schutzschaltgerätes für einen Niederspannungsstromkreis mit einer elektronischen Unterbrechungseinheit und ein Verfahren für ein Schutzschaltgerät für einen Niederspannungsstromkreis mit einer elektronischen Unterbrechungseinheit.

Mit Niederspannung sind Spannungen von bis zu 1000 Volt Wechselspannung oder bis zu 1500 Volt Gleichspannung gemeint. Mit Niederspannung sind insbesondere Spannungen gemeint, die größer als die Kleinspannung, mit Werten von 50 Volt Wechselspannung bzw. 120 Volt Gleichspannung, sind.

Mit Niederspannungsstromkreis bzw. -netz oder -anlage sind Stromkreise mit Nennströmen bzw. Bemessungsströmen von bis zu 125 Ampere, spezifischer bis zu 63 Ampere gemeint. Mit Niederspannungsstromkreis sind insbesondere Stromkreise mit Nennströmen bzw. Bemessungsströmen von bis zu 50 Ampere, 40 Ampere, 32 Ampere, 25 Ampere, 16 Ampere oder 10 Ampere gemeint. Mit den genannten Stromwerten sind insbesondere Nenn-, Bemessungs- oder/und Abschaltströme gemeint, d.h. der Strom der im Normalfall maximal über den Stromkreis geführt wird bzw. bei denen der elektrische Stromkreis üblicherweise unterbrochen wird, beispielsweise durch eine Schutzeinrichtung, wie ein Schutzschaltgerät, Leitungsschutzschalter oder Leistungsschalter. Die Nennströme können sich weiter staffeln, von 0,5 A über 1 A, 2 A, 3 A, 4 A, 5 A, 6 A, 7 A, 8 A, 9 A, 10 A, usw. bis 16 A.

Leitungsschutzschalter sind seit langem bekannte Überstromschutzeinrichtungen, die in der Elektroinstallationstechnik in Niederspannungsstromkreisen eingesetzt werden. Diese schützen Leitungen vor Beschädigung durch Erwärmung infolge zu hohen Stromes und/oder Kurzschluss. Ein Leitungsschutzschalter kann den Stromkreis bei Überlast und/oder Kurzschluss selbsttätig abschalten. Ein Leitungsschutzschalter ist ein nicht selbsttätig zurückstellendes Sicherungselement.

Leistungsschalter sind, im Gegensatz zu Leitungsschutzschaltern, für Ströme größer als 125 A vorgesehen, teilweise auch schon ab 63 Ampere. Leitungsschutzschalter sind deshalb einfacher und filigraner aufgebaut. Leitungsschutzschalter weisen üblicherweise eine Befestigungsmöglichkeit zur Befestigung auf einer so genannten Hutschiene (Tragschiene, DIN-Schiene, TH35) auf.

Leitungsschutzschalter sind elektromechanisch aufgebaut. In einem Gehäuse weisen sie einen mechanischen Schaltkontakt bzw. Arbeitsstromauslöser zur Unterbrechung (Auslösung) des elektrischen Stromes auf. Üblicherweise wird ein Bimetall-Schutzelement bzw. Bimetall-Element zur Auslösung (Unterbrechung) bei länger anhaltenden Überstrom (Überstromschutz) respektive bei thermischer Überlast (Überlastschutz) eingesetzt. Ein elektromagnetischer Auslöser mit einer Spule wird zur kurzzeitigen Auslösung bei Überschreiten eines Überstromgrenzwerts bzw. im Falle eines Kurzschlusses (Kurzschlussschutz) eingesetzt. Eine oder mehrere Lichtbogenlöschkammer(n) bzw. Einrichtungen zur Lichtbogenlöschung sind vorgesehen. Ferner Anschlusselemente für Leiter des zu schützenden elektrischen Stromkreises.

Schutzschaltgeräte mit einer elektronischen Unterbrechungseinheit sind relativ neuartige Entwicklungen. Diese weisen eine halbleiterbasierte elektronische Unterbrechungseinheit auf. D.h. der elektrische Stromfluss des Niederspannungsstromkreises wird über Halbleiterbauelemente respektive Halbleiterschalter geführt, die den elektrischen Stromfluss unterbrechen bzw. leitfähig geschaltet werden können. Schutzschaltgeräte mit einer elektronischen Unterbrechungseinheit weisen ferner häufig eine mechanische Trennkontakteinheit auf, insbesondere mit Trennereigenschaften gemäß einschlägigem Normen für Niederspannungsstromkreise, wobei die Kontakte der mechanischen Trennkontakteinheit in Serie zur elektronischen Unterbrechungseinheit geschaltet sind, d.h. der Strom des zu schützenden Niederspannungsstromkreises wird sowohl über die mechanische Trennkontakteinheit als auch über die elektronische Unterbrechungseinheit geführt.

Die vorliegende Erfindung ist sowohl für Niederspannungsgleichstromkreise als auch für Niederspannungswechselspannungsstromkreise einsetzbar. Die Erfindung bezieht sich insbesondere auf Niederspannungswechselstromkreise, mit einer Wechselspannung, üblicherweise mit einer zeitabhängigen sinusförmigen Wechselspannung mit der Frequenz f. Die zeitliche Abhängigkeit des momentanen Spannungswertes u(t) der Wechselspannung ist durch die Gleichung:

$$u(t) = U * \sin (2\pi * f * t)$$

beschrieben. Wobei:

u(t) = momentaner Spannungswert zu der Zeit t

U = Amplitude der Spannung

Eine harmonische Wechselspannung lässt sich durch die Rotation eines Zeigers darstellen, dessen Länge der Amplitude (U) der Spannung entspricht. Die Momentanauslenkung ist dabei die Projektion des Zeigers auf ein Koordinatensystem. Eine Schwingungsperiode entspricht einer vollen Umdrehung des Zeigers und dessen Vollwinkel beträgt 2n (2Pi) bzw. 360°. Die Kreisfrequenz ist die Änderungsrate des Phasenwinkels dieses rotierenden Zeigers. Die Kreisfrequenz einer harmonischen Schwingung beträgt immer das $2\pi$-fache ihrer Frequenz, d.h.:

$$\omega = 2\pi \cdot f = 2\pi/T = \text{Kreisfrequenz der Wechselspannung}$$

(T = Periodendauer der Schwingung)

Häufig wird die Angabe der Kreisfrequenz ($\omega$) gegenüber der Frequenz (f) bevorzugt, da sich viele Formeln der Schwingungslehre aufgrund des Auftretens trigonometrischer Funktionen, deren Periode per Definition 2n ist, mit Hilfe der Kreisfrequenz kompakter darstellen lassen:

$$u(t) = U \cdot \sin(\omega t)$$

Im Falle zeitlich nicht konstanter Kreisfrequenzen wird auch der Begriff momentane Kreisfrequenz verwendet.

Bei einer sinusförmigen, insbesondere zeitlich konstanten, Wechselspannung entspricht der zeitabhängige Wert aus der Winkelgeschwindigkeit $\omega$ und der Zeit t dem zeitabhängigen Winkel $\varphi(t)$, der auch als Phasenwinkel $\varphi(t)$ bezeichnet wird. D.h. der Phasenwinkel $\varphi(t)$ durchläuft periodisch den Bereich 0...2n bzw. 0°...360°. D.h. der Phasenwinkel nimmt periodisch einen Wert zwischen 0 und 2n bzw. 0° und 360° an ($\varphi = n \cdot (0...2n)$ bzw. $\varphi = n \cdot (0°...360°)$), wegen Periodizität; verkürzt: $\varphi = 0...2\pi$ bzw. $\varphi = 0°...360°$) .

Mit momentanem Spannungswert u(t) ist folglich der momentane Wert der Spannung zum Zeitpunkt t, d.h. bei einer sinusförmigen (periodischen) Wechselspannung der Wert der Spannung zum Phasenwinkel $\varphi$ gemeint ($\varphi = 0...2\pi$ bzw. $\varphi = 0°...360°$, der jeweiligen Periode).

Aufgabe der vorliegenden Erfindung ist es, ein Schutzschaltgerät eingangs genannter Art zu verbessern, insbesondere eine Zerstörung, eine Beschädigung oder einen unzulässigen Betriebszustand (insbesondere eine unzulässige Betriebstemperatur) eines Schutzschaltgerätes, insbesondere deren Anschlussklemmen zu vermeiden.

Diese Aufgabe wird durch ein Schutzschaltgeräte mit den Merkmalen des Patentanspruchs 1, sowie durch ein Verfahren gemäß Patentanspruch 18 gelöst.

Erfindungsgemäß wird ein Schutzschaltgerät zum Schutz eines elektrischen Niederspannungsstromkreises, insbesondere Niederspannungswechselstromkreises, vorgeschlagen, aufweisend:

- ein Gehäuse mit mindestens zwei netzseitigen Anschlüssen und mindestens einem lastseitigen Anschluss, beide für den Niederspannungsstromkreis,
- dass die netzseitigen Anschlüsse und der mindestens eine lastseitige Anschluss jeweils Anschlussklemmen aufweist, zum Anschluss von externen (d.h. außerhalb des Schutzschaltgerätes) Leitern des zu schützenden Niederspannungsstromkreises an das Schutzschaltgerät,
- eine mechanische Trennkontakteinheit, die in Serie mit einer elektronischen Unterbrechungseinheit geschaltet ist, wobei die Serienschaltung einerseits mit einem der mindestens zwei netzseitigen und andererseits mit dem mindestens einem lastseitigen Anschluss verbunden ist,
- dass die mechanische Trennkontakteinheit durch ein Öffnen mindestens eines Kontaktes zur Vermeidung eines Stromflusses oder ein Schließen des mindestens einen Kontaktes für einen Stromfluss im Niederspannungsstromkreis schaltbar ist,
- dass die elektronische Unterbrechungseinheit durch halbleiterbasierte Schaltelemente in einen hochohmigen Zustand der Schaltelemente zur Vermeidung eines Stromflusses oder einen niederohmigen Zustand der Schaltelemente zum Stromfluss im Niederspannungsstromkreis schaltbar ist,
- einer Stromsensoreinheit, zur Ermittlung der Höhe des Stromes des Niederspannungsstromkreises,
- einer Steuerungseinheit, die mit der Stromsensoreinheit, der mechanischen Trennkontakteinheit und der elektronischen Unterbrechungseinheit verbunden ist, wobei bei Überschreitung der ermittelten Höhe des Stromes über Strom- oder/und Strom-Zeitgrenzwerten (d.h. wenn eine Stromhöhe für eine gewisse Zeit vorliegt) eine Vermeidung eines Stromflusses des Niederspannungsstromkreises initiiert wird, insbesondere durch einen hochohmigen Zustand der Schaltelemente der elektronischen Unterbrechungseinheit.

Erfindungsgemäß ist ein mit der Steuerungseinheit verbundener Temperatursensor vorgesehen, zur Ermittlung der Höhe der Temperatur. Der Temperatursensor ist bei (an) oder im Bereich einer Anschlussklemme (oder von/der Anschlussklemmen) vorgesehen.

Erfindungsgemäß ist das Schutzschaltgerät derart ausgestaltet, dass bei Überschreitung der ermittelten Höhe der Temperatur (bei mindestens einer Anschlussklemme) über einen ersten Temperaturschwellwert die elektronischen Unterbrechungseinheit in einen hochohmigen Zustand der Schaltelemente zur Vermeidung eines Stromflusses geschaltet wird, um eine Überhitzung der Anschlussklemme zu vermeiden.

Durch den hochohmigen Zustand wird der Stromfluss über die Anschlussklemme(n) unterbrochen und somit entsteht keine Verlustleistung mehr an der Anschlussklemme, sodass diese Abkühlen kann. Mit Vermeidung der Überhitzung ist gemeint, dass die Anschlussklemme bzw. das Schutzschaltgerät innerhalb seiner zulässigen thermischen Grenzen bzw. zulässigen (Geräte-)Temperaturen bleibt.

Dies hat den Vorteil, dass eine Überhitzung der Anschlussklemme(n) bzw. des Schutzschaltgerätes vermieden wird. So kann eine thermische Überlastung oder thermische Zerstörung abgewendet werden. Es kann ein Schutz vor Gerätebrand / Brand in einer Unterverteilung bereitgestellt werden. So wird eine Versorgungssicherheit bereitgestellt. Durch die Vermeidung des Stromflusses wird eine Erwärmung des Schutzschaltgerätes vermieden und ein sicherer Zustand hergestellt.

Die Ursache für die Erwärmung einer Anschlussklemme liegt im Wesentlichen im stets vorhandenen ohmschen Übergangswiderstand, der zusammen mit dem Stromfluss (der über die Anschlussklemme fließt) zu einer elektrischen Verlustleistung und damit verbundenen Erwärmung an der Anschlussklemme führt.

Der elektrische Übergangwiderstand der Anschlussklemme ist hierbei von verschiedenen Faktoren abhängig. Z.B. kann schon eine (typischerweise) auftretende Alterung zu einer Erhöhung des Übergangswiderstandes führen. Aber auch Korrosion, die je nach Einsatzort (z.B. beim Einsatz in Umgebungen mit Schadgas oder Seeluft (Salzgehalt)) vermehrt auftreten kann, führt zu einer Erhöhung des Übergangswiderstandes.

Des Weiteren sind auch fehlerhafte Installationen, wie z.B. ein falsches (und insbesondere zu geringes) Anzugsmoment bei einer Schraubklemme oder ein nicht passender Leiterquerschnitt bei einer Steckklemme (Quetschklemme) Gründe, die eine Erhöhung des Übergangswiderstandes zur Folge hätten. Eine lose Verbindung, z.B. auf Grund einer mechanischen (Über-)Beanspruchung, kann ebenfalls zu einer Erhöhung des Übergangswiderstandes an der Anschlussklemme führen. Aber auch einfache Verschmutzungen an den Kontaktflächen (durch z.B. nicht ordnungsgemäße Handhabung während der Installation) können zu einer Erhöhung des Übergangswiderstandes führen.

Weitere vorteilhafte Ausgestaltungen der Erfindung sind in den Unteransprüchen und im Ausführungsbeispiel angegeben.

In einer vorteilhaften Ausgestaltung der Erfindung ist für die netzseitigen Anschlussklemmen mindestens ein netzseitiger Temperatursensor vorgesehen, für die Ermittlung der Höhe der Temperatur der netzseitigen Anschlussklemmen.

Ein netzseitiger Temperatursensor kann vorteilhaft dann vorgesehen sein, wenn beispielsweise zwei netzseitige Anschlussklemmen nebeneinander liegen. Der netzseitige Temperatursensor kann dann vorteilhaft in der Mitte der beiden Anschlussklemmen vorgesehen sein.

In einer vorteilhaften Ausgestaltung der Erfindung ist für die mindestens eine lastseitige Anschlussklemme mindestens ein lastseitiger Temperatursensor vorgesehen, für die Ermittlung der Höhe der Temperatur der mindestens einen lastseitigen Anschlussklemme.

Im Falle zweier lastseitiger Anschlussklemmen kann vorteilhaft ein lastseitiger Temperatursensor vorgesehen sein, beispielsweise wenn die zwei lastseitigen Anschlussklemmen nebeneinander liegen. Der lastseitige Temperatursensor kann dann vorteilhaft in der Mitte der beiden Anschlussklemmen vorgesehen sein.

In einer vorteilhaften Ausgestaltung der Erfindung ist pro Anschlussklemme, insbesondere der stromführenden Leiter des Niederspannungsstromkreises, jeweils ein (anschlussklemmenbezogener) Temperatursensor vorgesehen ist, für die Ermittlung der Höhe der Temperatur der jeweiligen Anschlussklemme.

Dies hat den besonderen Vorteil, dass eine individuelle (kritische Anschlussklemmen), wesentliche (stromführende Anschlussklemmen des Niederspannungsstromkreises) bzw. vollständige Überwachung (alle Anschlussklemmen, ggfs. einzeln) der Höhe der Temperatur der jeweiligen Anschlussklemmen ermöglicht wird. So kann eine Überhitzung der überwachten Anschlussklemme(n) bzw. in Folge des Schutzschaltgerätes vermieden wird. So kann eine thermische Überlastung oder thermische Zerstörung abgewendet werden. Es kann ein Schutz vor Gerätebrand / Brand in einer Unterverteilung bereitgestellt werden. Durch die Vermeidung des Stromflusses wird eine Erwärmung des Schutzschaltgerätes vermieden und ein sicherer Zustand hergestellt.

In einer vorteilhaften Ausgestaltung der Erfindung ist die mechanische Trennkontakteinheit dem lastseitigen Anschluss und die elektronische Unterbrechungseinheit (EU) dem netzseitigen Anschluss zugeordnet ist. Insbesondere ist die mechanische Trennkontakteinheit durch eine mechanische Handhabe bedienbar, um ein Öffnen des mindestens einen Kontaktes oder ein Schließen des mindestens einen Kontaktes zu schalten. Dies hat den besonderen Vorteil, dass eine Struktur für ein Schutzschaltgerät gegeben ist, bei der eine Funktionsfähigkeit des Schutzschaltgerätes auch bei geöffneten Kontakten der mechanischen Trennkontakteinheit gegeben ist.

In einer vorteilhaften Ausgestaltung der Erfindung sind zwei netzseitige Anschlüsse und zwei lastseitige Anschlüsse vorgesehen. Insbesondere sind ein netzseitiger Neutralleiteranschluss, ein netzseitiger Phasenleiteranschluss, ein lastseitiger Neutralleiteranschluss und ein lastseitiger Phasenleiteranschluss vorgesehen.

Dies hat den besonderen Vorteil, dass eine Struktur für ein zweipoliges Schutzschaltgerät gegeben ist, so dass Phasen- und Neutralleiter direkt angeschlossen werden können und beispielsweise weitere Neutralleiterschienen entfallen können.

In einer vorteilhaften Ausgestaltung der Erfindung wird bei einem initiierten hochohmigen Zustand der Schaltelemente zur Vermeidung der Überhitzung und bei Überschreitung der ermittelten Höhe der Temperatur über einen höheren zweiten Temperaturschwellwert (d.h. der zweite der Temperaturschwellwert ist höher als der erste Temperaturschwellwert) mindestens eine Kontakt der mechanischen Trennkontakteinheit geöffnet wird.

Dies hat den besonderen Vorteil, dass eine weitere Sicherheit im Schutzschaltgerät vorgesehen ist. Wenn trotz initiierter hochohmiger elektronischer Unterbrechungseinheit eine steigende Erwärmung vorliegt, könnte dies darauf zurückzuführen sein, dass die elektronische Unterbrechungseinheit nicht bzw. nicht ausreichend hochohmig ist und ein (fehlerhafter) Stromfluss zur weiteren Erwärmung der Anschlussklemme(n) führt. In diesem Fall wird der mindestens eine Kontakt der mechanischen Trennkontakteinheit geöffnet, um eine galvanische Trennung zu erreichen und somit den Stromfluss komplett zu vermeiden. Durch diese weitere Sicherheitsmaßnahme wird eine Zerstörung der Anschlussklemme(n) / des Schutzschaltgerätes abgewendet.

In einer vorteilhaften Ausgestaltung der Erfindung wird bei einem hochohmigen Zustand der Schaltelemente zur Vermeidung der Überhitzung und Unterschreitung der ermittelten Höhe der Temperatur unter einen dritten Temperaturschwellwert die elektronische Unterbrechungseinheit in einen niederohmigen Zustand (für einen Stromfluss im Niederspannungsstromkreis) geschaltet. Der dritte Temperaturschwellwert ist kleiner als der erste Temperaturschwellwert.

Dies hat den besonderen Vorteil, dass nach einer Abkühlung der Anschlussklemme(n) des Schutzschaltgerätes ein Stromfluss wieder ermöglicht wird. So ist das Schutzschaltgerät immer in einem sicheren Betriebszustand.

In einer vorteilhaften Ausgestaltung der Erfindung kann alternativ bei einem hochohmigen Zustand der Schaltelemente zur Vermeidung der Überhitzung und Ablauf einer ersten Zeitspanne seit Eintreten des hochohmigen Zustandes der Schaltelemente (zur Vermeidung der Überhitzung) die elektronische Unterbrechungseinheit in den niederohmigen Zustand (für einen Stromfluss im Niederspannungsstromkreis) geschaltet werden.

Die erste Zeitspanne kann beispielsweise in der Größenordnung von 5 Minuten, 10 Minuten, 15 Minuten, 20 Minuten, 25 Minuten oder 30 Minuten liegen.

Dies hat den besonderen Vorteil, dass eine feste Abkühlzeit (erste Zeitspann) implementiert wird. Nach einer Abkühlung der Anschlussklemme(n) des Schutzschaltgerätes wird ein Stromfluss wieder ermöglicht.

In einer vorteilhaften Ausgestaltung der Erfindung wird bei einem eine erste Anzahl überschreitenden Wechsel in den hochohmigen Zustand zur Vermeidung der Überhitzung (und zurück in den niederohmigen Zustand) innerhalb eines ersten Zeitrahmens der mindestens eine Kontakt der mechanischen Trennkontakteinheit geöffnet.

Der erste Zeitrahmen kann beispielsweise eine Stunde, mehrere Stunden, wie 3 Stunden, 5 Stunden, 6 Stunden, 10 Stunden, 12 Stunden, 18 Stunden, 24 Stunden (ein Tag), mehrere Tage, eine Woche sein. Die Anzahl der Wechsel können beispielsweise ab 2, 3, 4, ..., 10, .... 20 Wechsel sein.

Dies hat den besonderen Vorteil, dass bei einem häufigen temperaturbedingten Wechsel zum hochohmigen Zustand (vom niederohmigen in den hochohmige Zustand) eine weitere Sicherheit implementiert wird und der mindestens eine Kontakt der mechanischen Trennkontakteinheit geöffnet wird, um eine galvanische Trennung durchzuführen und einen erwärmenden Stromfluss komplett zu vermeiden. So wird ein weiteres Wechseln zum hochohmigen Zustand (zum hochohmigen und zurück zum niederohmigen Zustand) der elektronischen Unterbrechungseinheit vermieden und Sicherheit im Niederspannungsstromkreis hergestellt.

In einer vorteilhaften Ausgestaltung der Erfindung ist eine mit der Steuerungseinheit verbundene Kommunikationseinheit vorgesehen. Bei Überschreitung eines vierten Temperaturschwellwertes wird eine Warnung mittels der Kommunikationseinheit abgegeben. Der vierte Temperaturschwellwert ist vorteilhaft kleiner als der erste Temperaturschwellwert.

Der vierte Temperaturschwellwert kann beispielsweise 10, ..., 20, ..., 30, ..., 40 Kelvin kleiner als der erste Temperaturschwellwert sein.

Dies hat den besonderen Vorteil, dass bei Erreichen eines Temperaturschwellwertes ein Hinweis kommuniziert wird, so dass beispielsweise bzw. vorteilhafterweise eine Ursachenermittlung durchgeführt werden kann, bevor es zu einer Abschaltung aufgrund einer Übertemperatur kommt.

Alternativ oder zusätzlich kann mittels der Kommunikationseinheit die Höhe der Temperatur (oder ein Äquivalent) des Temperatursensors abgegeben (kommuniziert) werden.

Dies hat den besonderen Vorteil, dass eine (zentrale) Temperaturüberwachung eines bzw. mehrerer Schutzschaltgeräte durchgeführt werden kann, so dass bei steigenden Temperaturen entsprechende Maßnahmen ergriffen werden können.

In einer vorteilhaften Ausgestaltung der Erfindung ist eine mit der Steuerungseinheit verbundene Anzeigeeinheit vorgesehen, die am Schutzschaltgerät sichtbare Anzeigemittel aufweist, zur Anzeige der Überschreitung von Temperaturgrenzwerten (erster oder/und zweiter oder/und dritter oder/und vierter) oder (und) der Höhe der Temperatur. Alternativ oder zusätzlich eines hochohmigen oder niederohmigen Zustandes der elektronischen Unterbrechungseinheit.

Dies hat den besonderen Vorteil, dass eine Visualisierung des Temperaturzustandes gegeben ist.

In einer vorteilhaften Ausgestaltung der Erfindung ist der mindestens eine Kontakt der mechanischen Trennkontakteinheit durch die Steuerungseinheit öffenbar, kann aber nicht geschlossen werden.

Dies hat den besonderen Vorteil, dass eine hohe Sicherheit des Schutzschaltgerätes gegeben ist, da schutzschaltgeräteintern der Kontakt nicht fehlerhaft (und nicht aus der Ferne, über z.B. ein Kommunikationssignal) geschlossen werden kann.

In einer vorteilhaften Ausgestaltung der Erfindung weist der mindestens eine Kontakt der mechanischen Trennkontakteinheit eine Freischaltfunktionalität auf. Diese kann eine gemäß Normenlage vorgesehene Freischaltfunktionalität sein. Insbesondere derart, dass der mindestens eine Kontakt durch die Steuerungseinheit geöffnet werden kann, auch wenn die mechanische Handhabe blockiert ist, d.h. zum Beispiel, wenn die Handhabe für den geschlossenen Kontaktzustand blockiert wird/ist.

Dies hat den besonderen Vorteil, dass ein hohe Sicherheit und ein insbesondere Normengerechtes Schutzschaltgerät für Niederspannungsstromkreise gegeben ist. Der Stromfluss kann jederzeit galvanisch unterbrochen werden, durch Öffnen des mindestens einen Kontaktes.

Erfindungsgemäß wird ein korrespondierendes Verfahren für ein Schutzschaltgerät für einen Niederspannungsstromkreis mit elektronischen (halbleiterbasierten) Schaltelementen mit den gleichen und weiteren Vorteilen beansprucht.

Das Verfahren für ein Schutzschaltgerät zum Schutz eines elektrischen Niederspannungsstromkreis mit:

- einem Gehäuse mit mindestens zwei netzseitigen Anschlüssen und mindestens einem lastseitigen Anschluss,
- dass die netzseitigen Anschlüsse und der mindestens eine lastseitige Anschluss jeweils Anschlussklemmen aufweist, zum Anschluss von externen Leitern des zu schützenden Niederspannungsstromkreises an das Schutzschaltgerät,
- einer mechanischen Trennkontakteinheit, die in Serie mit einer elektronischen Unterbrechungseinheit geschaltet ist, wobei die Serienschaltung einerseits mit einem der mindestens zwei netzseitigen und andererseits mit dem mindestens einem lastseitigen Anschluss verbunden ist,
- dass die mechanische Trennkontakteinheit durch ein Öffnen von mindestens eines Kontaktes zur Vermeidung eines Stromflusses oder ein Schließen des mindestens einen Kontaktes für einen Stromfluss im Niederspannungsstromkreis geschaltet werden kann,
- dass die elektronische Unterbrechungseinheit durch halbleiterbasierte Schaltelemente in einen hochohmigen Zustand der Schaltelemente zur Vermeidung eines Stromflusses oder einen niederohmigen Zustand der Schaltelemente zum Stromfluss im Niederspannungsstromkreis geschaltet werden kann,
- dass die Höhe des Stromes des Niederspannungsstromkreises ermittelt wird und bei Überschreitung von Strom- oder/und Strom-Zeitgrenzwerten eine Vermeidung eines Stromflusses des Niederspannungsstromkreises initiiert wird,
- dass die Höhe der Temperatur bei oder im Bereich mindestens einer Anschlussklemme ermittelt wird,
- dass bei Überschreitung der ermittelten Höhe der Temperatur über einen ersten Temperaturschwellwert (bei mindestens einer Anschlussklemme) die elektronische Unterbrechungseinheit in einen hochohmigen Zustand der Schaltelemente zur Vermeidung eines Stromflusses geschaltet wird, um eine Überhitzung der Anschlussklemme zu vermeiden.

Alle Ausgestaltungen, sowohl in abhängiger Form rückbezogen auf den Patentanspruch 1 bzw. 18, als auch rückbezogen lediglich auf einzelne Merkmale oder Merkmalskombinationen von Patentansprüchen, insbesondere auch ein Rückbezug der abhängigen Anordnungsansprüche auf den unabhängigen Verfahrensanspruch (und vice versa), bewirken eine Erhöhung der Sicherheit eines Schutzschaltgerätes und stellen ein neues Konzept für ein Schutzschaltgerät bereit.

Die beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit der Zeichnung näher erläutert werden.

Dabei zeigt die Zeichnung:

Figur 1A eine erste Darstellung eines Schutzschaltgerätes,

Figur 1B eine zweite Darstellung eines Schutzschaltgerätes,

Figur 2 eine erste Darstellung eines Diagramms,

Figur 3 eine zweite Darstellung eines Diagramms,

Figur 4 eine dritte Darstellung eines Diagramms,

Figur 5 eine vierte Darstellung eines Diagramms,

Figur 6 eine fünfte Darstellung eines Diagramms.

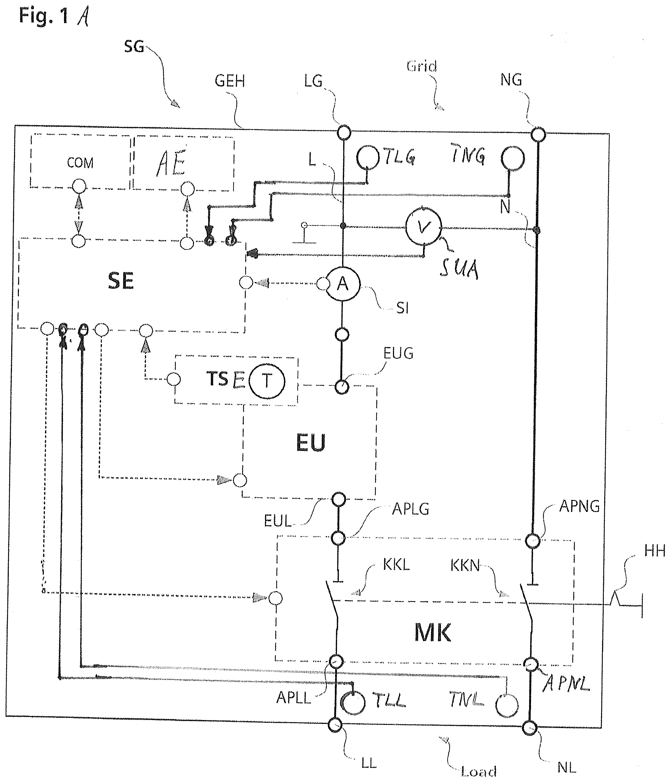

Figur 1A zeigt eine Darstellung eines Schutzschaltgerätes SG zum Schutz eines elektrischen Niederspannungsstromkreises, insbesondere Niederspannungswechselstromkreis, mit einem Gehäuse GEH, aufweisend:

- einer netzseitigen Neutralleiter-Anschlussklemme NG, einer netzseitigen Phasenleiter-Anschlussklemme LG, einer lastseitigen Neutralleiter-Anschlussklemme NL, einer lastseitigen Phasenleiter-Anschlussklemme LL zum Anschluss von externen Leitern des Niederspannungsstromkreises;

   an der Netzseite Grid, im Beispiel mit zwei netzseitigen Anschlüssen, ist üblicherweise eine Energiequelle angeschlossen,
   an der Lastseite Load, im Beispiel mit zwei lastseitigen Anschlüssen (es kann allerdings nur ein lastseitiger Anschluss, bevorzugt für den Phasenleiter L, vorgesehen sein) ist üblicherweise ein Verbraucher (eine Energiesenke) angeschlossen;

- eine (zweipolige) mechanische Trennkontakteinheit MK mit lastseitigen Anschlusspunkten APLL, APNL und netzseitigen Anschlusspunkten APLG, APNG,

   wobei für den Neutralleiter ein lastseitiger Anschlusspunkt APNL, für den Phasenleiter ein lastseitiger Anschlusspunkt APLL, für den Neutralleiter ein netzseitiger Anschlusspunkt APNG, für den Phasenleiter ein netzseitiger Anschlusspunkt APLG vorgesehen ist. Die lastseitigen Anschlusspunkte APNL, APLL sind mit den lastseitigen Neutral- und Phasenleiter-Anschlussklemmen NL, LL verbunden, so dass ein Öffnen von Kontakten KKN, KKL zur Vermeidung eines Stromflusses oder ein Schließen der Kontakte für einen Stromfluss im Niederspannungsstromkreis schaltbar ist,
   die mechanische Trennkontakteinheit kann auch als einpolige mechanische Trennkontakteinheit ausgeführt sein, d.h. mit einem Kontakt, wobei der Kontakt KKL bevorzugt im Phasenleiter L angeordnet ist, ein durch das Schutzschaltgerät SG durchgehender Neutralleiter N ist dann nicht vorgesehen,

- eine, insbesondere einpolige, elektronische Unterbrechungseinheit EU, (die bei einpoliger Ausführung insbesondere im Phasenleiter L angeordnet ist,)

   mit einem netzseitigen Verbindungspunkt EUG, der mit der netzseitigen Phasenleiter-Anschlussklemme LG in elektrischer Verbindung steht, und
   einem lastseitigen Verbindungspunkt EUL, der mit dem netzseitigen Anschlusspunkt APLG der mechanischen Trennkontakteinheit MK in elektrischer Verbindung steht bzw. verbunden ist, wobei die elektronische Unterbrechungseinheit durch halbleiterbasierte Schaltelemente einen hochohmigen Zustand der Schaltelemente zur Vermeidung eines Stromflusses oder einen niederohmigen Zustand der Schaltelemente zum Stromfluss im Niederspannungsstromkreis aufweist,

- eine Stromsensoreinheit SI, zur Ermittlung der Höhe des Stromes des Niederspannungsstromkreises, die insbesondere im Phasenleiter L angeordnet ist,
- einer Steuerungseinheit SE, die mit der Stromsensoreinheit SI, der mechanischen Trennkontakteinheit MK und der elektronischen Unterbrechungseinheit EU verbunden ist, wobei bei Überschreitung von Strom- oder/und Strom-Zeitgrenzwerten eine Vermeidung eines Stromflusses des Niederspannungsstromkreises initiiert wird, bevorzugt durch einen hochohmigen Zustand der elektronischen Unterbrechungseinheit EU.

Erfindungsgemäß ist das Schutzschaltgerät SG derart ausgestaltet, dass mindestens ein mit der Steuerungseinheit SE verbundener Temperatursensor vorgesehen ist, zur Ermittlung der Höhe der Temperatur. Der mindestens eine Temperatursensor ist bei oder im Bereich einer Anschlussklemme vorgesehen.
Im Beispiel gemäß Figur 1A weist:

die netzseitigen Neutralleiter-Anschlussklemme NG einen ersten netzseitigen Temperatursensor TNG (= netzseitiger Neutralleiter-Temperatursensor TNG) auf,
die netzseitigen Phasenleiter-Anschlussklemme LG einen zweiten netzseitigen Temperatursensor TLG (= netzseitiger Phasenleiter-Temperatursensor TLG) auf,
die lastseitige Neutralleiter-Anschlussklemme NL einen ersten lastseitigen Temperatursensor TNL (= lastseitiger Neutralleiter-Temperatursensor TNL) auf,
die lastseitige Phasenleiter-Anschlussklemme LL einen zweiten lastseitige Temperatursensor TLL (= lastseitiger Phasenleiter-Temperatursensor TLL) auf.

Die genannten Temperatursensoren sind jeweils mit der Steuerungseinheit SE verbunden.

Erfindungsgemäß ist das Schutzschaltgerät SG derart ausgestaltet, dass bei Überschreitung der Höhe der Temperatur ((mindestens) eines der vorgenannten Temperatursensoren der Anschlussklemmen) über einen ersten Temperaturschwellwert die elektronischen Unterbrechungseinheit EU in einen hochohmigen Zustand der Schaltelemente zur Vermeidung eines Stromflusses geschaltet wird, um eine Überhitzung der Anschlussklemmen des Schutzschaltgerätes zu vermeiden.

Ferner kann eine mit der Steuerungseinheit SE verbundene erste Spannungssensoreinheit SUA vorgesehen sein, die die Höhe der Spannung, insbesondere Momentanwerte der Höhe der Spannung, des Niederspannungsstromkreises, insbesondere an den netzseitigen Anschlussklemmen LG, NG, speziell zwischen netzseitiger Neutralleiter-Anschlussklemme NG und netzseitiger Phasenleiter-Anschlussklemme LG, ermittelt. Vorteilhaft erfolgt die Schaltung der elektronischen Unterbrechungseinheit EU in den niederohmigen Zustand dann, wenn der Betrag des Momentwertes der Höhe der Spannung eine erste Spannungsgrenze, die insbesondere kleiner oder gleich 50 Volt (oder 25 Volt oder 10 Volt) ist, unterschreitet.

Allgemein bilden die mechanische Trennkontakteinheit MK und die elektronische Unterbrechungseinheit EU eine Serienschaltung. Die Serienschaltung ist einerseits mit dem mindestens einem netzseitigen und andererseits mit dem mindestens einem lastseitigen Anschluss verbunden. Die mechanische Trennkontakteinheit MK kann vorteilhaft dem lastseitigen Anschluss und die elektronische Unterbrechungseinheit EU dem netzseitigen Anschluss zugeordnet sein, wie in Figur 1A dargestellt. Die mechanische Trennkontakteinheit MK kann durch eine mechanische Handhabe HH bedienbar sein, um ein Öffnen von Kontakten oder ein Schließen der Kontakte zu schalten, wie bei einem klassischen Leitungsschutzschaltern respektive Miniatur Circuit Breaker (MCB).

Die Steuerungseinheit SE kann einen Mikrocontroller (Mikrocontrollerunit) aufweisen.

Im Beispiel gemäß Figur 1A ist die elektronische Unterbrechungseinheit EU einpolig ausgeführt, im Beispiel im Phasenleiter. Hierbei ist der netzseitige Anschlusspunkt APNG für den Neutralleiter der mechanischen Trennkontakteinheit MK mit der netzseitigen Neutralleiter-Anschlussklemme NG des Gehäuses GEH verbunden. Bei einer einpoligen Variante des Schutzschaltgerätes SG kann diese Verbindung entfallen, als auch der Neutralleiterkontakt KKN, der mechanischen Trennkontakteinheit.

Das Schutzschaltgerät SG ist vorteilhaft derart ausgestaltet, dass die Kontakte der mechanischen Trennkontakteinheit MK durch die Steuerungseinheit SE geöffnet, aber nicht geschlossen werden können, was durch einen Pfeil von der Steuerungseinheit SE zur mechanischen Trennkontakte Einheit MK angedeutet ist.

Die mechanische Trennkontakteinheit MK ist durch eine mechanische Handhabe HH am Schutzschaltgerät SG bedienbar, um ein manuelles (händisches) Öffnen oder ein Schließen der Kontakte KKL, KKN zu schalten. Die mechanische Handhabe HH zeigt (im nicht blockierten Zustand) (speziell durch eine mechanische Verbindung zwischen Kontakten und Handhabe) den Schaltzustand (Offen oder Geschlossen) der Kontakte der mechanischen Trennkontakteinheit MK am Schutzschaltgerät an.

Die mechanische Trennkontakteinheit MK ist vorteilhaft derart ausgestaltet, dass ein (manuelles) Schließen der Kontakte durch die mechanische Handhabe erst nach einer Freigabe (Enable), insbesondere einem Freigabesignal, möglich ist. D. h., die Kontakte KKL, KKN der mechanischen Trennkontakteinheit MK können durch die Handhabe HH erst bei Vorliegen der Freigabe bzw. des Freigabesignals (von der Steuerungseinheit SE) geschlossen werden. Ohne die Freigabe bzw. das Freigabesignal kann die Handhabe HH zwar betätigt, die Kontakte aber nicht geschlossen werden ("Dauerrutscher").

Das Schutzschaltgerät SG weist eine (nicht dargestellte) Energieversorgung NT, beispielsweise ein Netzteil, auf. Insbesondere ist die Energieversorgung NT für die Steuerungseinheit SE vorgesehen. Die Energieversorgung NT ist beispielsweise mit der netzseitigen Neutralleiter-Anschlussklemme NG und der netzseitigen Phasenleiter-Anschlussklemme LG verbunden. In die Verbindung zur netzseitigen Neutralleiter-Anschlussklemme NG (oder/und Phasenleiter-Anschlussklemme LG) kann vorteilhaft eine Sicherung SS, insbesondere Schmelzsicherung, oder/und Schalter vorgesehen sein.

Im Falle eines rein einpoligen Schutzschaltgerätes erfolgt die Energieversorgung durch eine externe Energiequelle / weitere Anschlüsse.

Mit hochohmig ist ein Zustand gemeint, bei dem nur noch ein Strom vernachlässigbarer Größe fließt. Insbesondere sind mit hochohmig Widerstandswerte von größer als 1 Kiloohm, besser größer als 10 Kiloohm, 100 Kiloohm, 1 Megaohm, 10 Megaohm, 100 Megaohm, 1 Gigaohm oder größer gemeint.

Mit niederohmig ist ein Zustand gemeint, bei dem der auf dem Schutzschaltgerät angegebene Stromwert fließen könnte. Insbesondere sind mit niederohmig Widerstandswerte gemeint, die kleiner als 10 Ohm, besser kleiner als 1 Ohm, 100 Milliohm, 10 Milliohm, 1 Milliohm oder kleiner sind.

Die mechanische Trennkontakteinheit MK kann in einer ersten Variante einpolig unterbrechen. D.h. es wird nur ein Leiter (der beiden/mehrere Leiter), insbesondere der aktive Leiter respektive Phasenleiter unterbrochen, d.h. weist einen mechanischen Kontakt auf. Der Neutralleiter ist dann kontaktfrei, d.h. der Neutralleiter ist direkt verbunden.

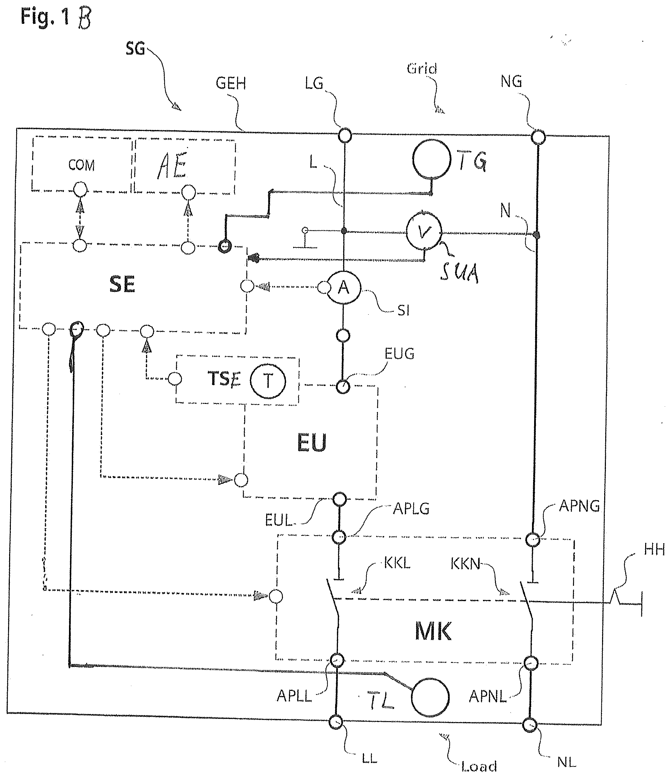

In einer zweiten Variante der mechanischen Trennkontakteinheit MK weist der Neutralleiter ebenfalls mechanische Kontakte auf (zweipolige Unterbrechung), wie in Figur 1 eingezeichnet.

Mit mechanischer Trennkontakteinheit MK ist insbesondere eine (normgerechte) Trennfunktion gemeint, realisiert durch die Trennkontakteinheit MK. Mit Trennfunktion sind die Punkte:

- Mindestluftstrecke nach Norm (Mindestabstand der Kontakte),
- (mechanische) Kontaktstellungsanzeige der Kontakte der mechanischen Trennkontakteinheit,
- Freiauslösung bzw. Freischaltfunktionalität, d.h. eine Betätigung zur Unterbrechung der Kontakte der mechanischen Trennkontakteinheit durch die Handhabe oder Steuerungseinheit ist immer möglich, so dass keine (dauerhafte) Blockierung der Kontakte in den geschlossenen Zustand durch die Handhabe möglich ist,

gemeint.

Insbesondere ist mit Freiauslösung bzw. Freischaltfunktionalität gemeint, dass der mindestens eine Kontakt durch die Steuerungseinheit geöffnet werden kann, auch wenn die mechanische Handhabe (z.B. im Ein-Zustand) blockiert ist.

Ferner kann die normgerechte Trennfunktion eine Abschließbarkeit der Trennkontakteinheit bzw. der Handhabe im ein- oder ausgeschalteten Zustand aufweisen.

Hinsichtlich der Mindestluftstrecke zwischen den Kontakten der Trennkontakteinheit ist diese im Wesentlichen spannungsabhängig. Weitere Parameter sind der Verschmutzungsgrad, die Art des Feldes (homogen, inhomogen), und der Luftdruck bzw. die Höhe über Normalnull.

Für diese Mindestluftstrecken bzw. Kriechstrecken gibt es entsprechende Vorschriften bzw. Normen. Diese Vorschriften geben beispielsweise bei Luft für eine Stoßspannungsfestigkeit die Mindestluftstrecke für ein inhomogenes und ein homogenes (ideales) elektrisches Feld in Abhängigkeit vom Verschmutzungsgrad an. Die Stoßspannungsfestigkeit ist die Festigkeit beim Anlegen einer entsprechenden Stoßspannung. Nur bei Vorliegen dieser Mindestlänge (Mindeststrecke) weist die Trennkontakteinheit bzw. Schutzschaltgerät eine Trennfunktion (Trennereigenschaft) auf.

Im Sinne der Erfindung sind hierbei für die Trennerfunktion und deren Eigenschaften insbesondere die Normenreihe DIN EN 60947 bzw. IEC 60947 einschlägig, auf die hier durch Referenz Bezug genommen wird.

Die Trennkontakteinheit ist vorteilhafterweise durch eine Mindestluftstrecke der geöffneten Trennkontakte in der AUS-Stellung (Geöffnet Stellung, geöffnete Kontakte) in Abhängigkeit von der Bemessungsstoßspannungsfestigkeit und dem Verschmutzungsgrad gekennzeichnet. Die Mindestluftstrecke beträgt insbesondere zwischen (im Minimum) 0,01 mm und 14 mm. Insbesondere beträgt vorteilhafterweise die Mindestluftstrecke zwischen 0,01 mm bei 0,33 kV und 14 mm bei 12 kV, insbesondere für Verschmutzungsgrad 1 sowie insbesondere für inhomogene Felder.

Vorteilhafterweise kann die Mindestluftstrecke die folgenden Werte aufweisen:

**E DIN EN 60947-1 (VDE 0660-100):2018-06**

**Tabelle 13** - **Mindestluftstrecken**

| Bemessungsstoßspannungsfestigkeit Uimp kV | Mindestluftstrecken mm | | | | | | | |
|---|---|---|---|---|---|---|---|---|
| | Fall A inhomogenes Feld (siehe 3.7.63) | | | | Fall B homogenes Feld, Ideale Bedingungen (siehe 3.7.62) | | | |
| | Verschmutzungsgrad | | | | Verschmutzungsgrad | | | |
| | 1 | 2 | 3 | 4 | 1 | 2 | 3 | 4 |
| 0,33 | 0,01 | | | | 0,01 | | | |
| 0,5 | 0,04 | 0,2 | | | 0,04 | 0,2 | | |
| 0,8 | 0,1 | | 0,8 | | 0,1 | | 0,8 | |
| 1,5 | 0,5 | 0,5 | | 1,6 | 0,3 | 0,3 | | 1,6 |
| 2,5 | 1,5 | 1,5 | 1,5 | | 0,6 | 0,6 | | |
| 4,0 | 3 | 3 | 3 | 3 | 1,2 | 1,2 | 1,2 | |
| 6,0 | 5,5 | 5,5 | 5,5 | 5,5 | 2 | 2 | 2 | 2 |

(fortgesetzt)

| | 1 | 2 | 3 | 4 | 1 | 2 | 3 | 4 |
|---|---|---|---|---|---|---|---|---|
| 8,0 | 8 | 8 | 8 | 8 | 3 | 3 | 3 | 3 |
| 12 | 14 | 14 | 14 | 14 | 4,5 | 4,5 | 4,5 | 4.5 |
| ANMERKUNG Die angegebenen kleinsten Luftstrecken beruhen auf der 1,2/50-μs-Stoßspannung bei einem Luftdruck von 80 kPa, was dem Luftdruck bei 2 000 m über NN entspricht. | | | | | | | | |

Die Verschmutzungsgrade und Feldarten entsprechen den in den Normen definierten. Dadurch lässt vorteilhafterweise ein entsprechend der Bemessungsstoßspannungsfestigkeit dimensioniertes normgerechtes Schutzschaltgerät erzielen.

Mit mechanischer Trennkontakteinheit ist insbesondere kein Relaiskontakt gemeint.

Das Schutzschaltgerät kann eine (insbesondere leitungslose / drahtlose) Kommunikationseinheit COM aufweisen, die mit der Steuerungseinheit SE verbunden ist bzw. ein Teil dieser ist. Bei Überschreitung eines vierten Temperaturschwellwertes kann eine Warnung mittels der Kommunikationseinheit COM abgegeben werden. Alternativ oder zusätzlich kann mittels der Kommunikationseinheit COM die Höhe der Temperatur abgegeben (kommuniziert) werden. Die Abgabe bzw. Kommunikation der Überschreitung der Temperaturgrenzwerte oder (und) der Höhe der Temperatur kann für die Netzseite Grid oder (und) Lastseite Load erfolgen. Die Abgabe bzw. Kommunikation der Überschreitung von Temperaturgrenzwerten oder (und) der Höhe der Temperatur kann alternativ oder zusätzlich pro Temperatursensor erfolgen.

Weiterhin kann eine Anzeigeeinheit AE vorgesehen sein. Die Anzeigeeinheit AE kann als kombinierte Anzeige- und Eingabeeinheit ausgestaltet sein. Die Anzeigeeinheit AE (Anzeige- und Eingabeeinheit) ist mit der Steuerungseinheit SE verbunden bzw. ein Teil dieser. Die Anzeigeeinheit weist am Schutzschaltgerät sichtbare Anzeigemittel auf, insbesondere zur Anzeige des hochohmigen oder niederohmigen Zustandes der elektronischen Unterbrechungseinheit EU. Alternativ bzw. zusätzlich zur Anzeige der Überschreitung von Temperaturgrenzwerten (erster oder/und zweiter oder/und dritter oder/und vierter) oder (und) der Höhe der Temperatur. Die Anzeige der Überschreitung von Temperaturgrenzwerten oder (und) der Höhe der Temperatur kann für die Netzseite Grid oder (und) Lastseite Load erfolgen. Die Anzeige der Überschreitung von Temperaturgrenzwerten oder (und) der Höhe der Temperatur kann alternativ oder zusätzlich pro Temperatursensor erfolgen.

Das Schutzschaltgerät SG arbeitet beispielsweise prinzipiell derart, dass bei geschlossenen Kontakten der mechanischen Trennkontakteinheit und niederohmiger elektronischer Unterbrechungseinheit und

-   bei einem ermittelten Strom, der einen ersten Stromwert überschreitet, insbesondere dass der erste Stromwert für eine erste Zeitgrenze überschritten wird, die elektronische Unterbrechungseinheit EU hochohmig wird und die mechanische Trennkontakteinheit MK geschlossen bleibt, oder/und

-   (oder/und) bei einem ermittelten Strom, der einen höheren zweiten Stromwert, insbesondere für eine zweite Zeitgrenze, überschreitet, die elektronische Unterbrechungseinheit EU hochohmig wird und die mechanische Trennkontakteinheit MK geöffnet wird, oder/und

-   bei einem ermittelten Strom, der einen noch höheren dritten Stromwert überschreitet, die elektronische Unterbrechungseinheit hochohmig wird und die mechanische Trennkontakteinheit MK geöffnet wird.

Die elektronische Unterbrechungseinheit EU kann einen weiteren unterbrechungseinheitsseitigen Temperatursensor TSE aufweisen. Die mit diesem unterbrechungseinheitsseitigen Temperatursensor vorgesehene Funktion kann analog zum anschlussklemmenseitigen Temperatursensor(en) sein (TLG, TNG, TLL, TNL, TG, TL).

Figur 1B zeigt eine Darstellung eines Schutzschaltgerätes gemäß Figur 1A, mit dem Unterschied,

-   dass für die (beispielsweise zwei) netzseitigen Anschlussklemmen nur ein netzseitiger Temperatursensor TG vorgesehen ist. Für die Ermittlung der Höhe der Temperatur der netzseitigen Anschlussklemmen. Der netzseitige Temperatursensor TG ist vorteilhaft zwischen den (vorteilhaft benachbarten) netzseitigen Anschlussklemmen NG, LG angeordnet.

-   dass für die (beispielsweise zwei) lastseitigen Anschlussklemmen nur ein lastseitiger Temperatursensor vorgesehen ist. Für die Ermittlung der Höhe der Temperatur der lastseitigen Anschlussklemmen. Der lastseitige Temperatursensor TL ist vorteilhaft zwischen den (vorteilhaft benachbarten) lastseitigen Anschlussklemmen NL, LL angeordnet.

Der netzseitige Temperatursensor TG und der lastseitige Temperatursensor TL sind jeweils mit der Steuerungseinheit SE verbunden.

Die Funktion bzw. Arbeitsweise ist analog dem zu Figur 1A bzw. nachfolgend beschriebenen.

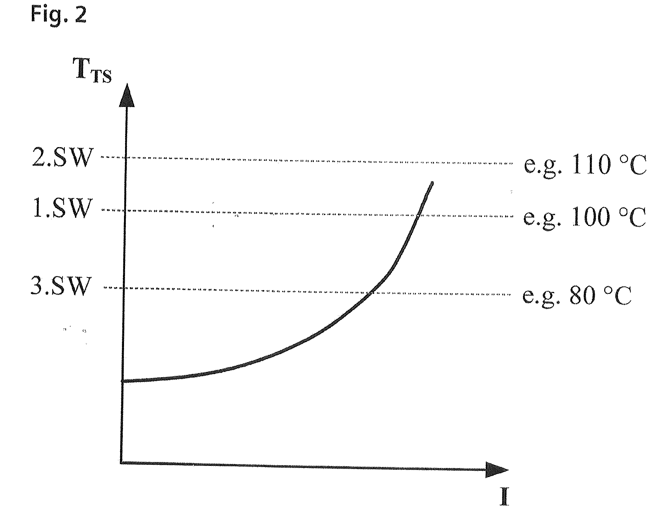

Figur 2 zeigt eine Darstellung eines ersten Diagramms bzw. Koordinatensystems, bei dem auf der horizontalen Achse (Abszisse) die Höhe des Stromes I des Niederspannungsstromkreises aufgetragen und auf der vertikalen Achse (Ordinate) die Höhe der Temperatur $T_{TS}$ eines der (anschlussklemmenseitigen) Temperatursensoren aufgetragen ist.

Es wird der Verlauf der Temperatur $T_{TS}$ eines (des jeweiligen) Temperatursensors in Abhängigkeit von der Höhe des Stromes I des Niederspannungsstromkreises dargestellt.

Dabei wird angenommen, dass die Erwärmung an einer Anschlussklemme abhängig ist von der Höhe des Stromes I des Niederspannungsstromkreises durch das Schutzschaltgerät (das Schutzschaltgerät soll den Niederspannungsstromkreis schützen). Mit steigender Höhe des Stromes I steigt die Temperatur der Anschlussklemme. Somit steigt die durch den Temperatursensor ermittelte Temperatur $T_{TS}$ des Schutzschaltgerätes. Die Temperatur nimmt monoton steigend mit der Höhe des Stromes zu. (Neben der Höhe des Stromes hat auch die Umgebungstemperatur einen Einfluss auf die Erwärmung im Schutzschaltgerät. Zur einfacheren Darstellung ist dies in der Figur 2 nicht dargestellt.)

Gemäß Figur 2 sind verschiedene Temperaturaschwellwerte eingezeichnet. Ein erster Temperaturschwellwert 1.SW, im Beispiel 100 °C, ein zweiter Temperaturschwellwertes 2.SW, im Beispiel 110 °C, ein dritter Temperaturschwellwertes 3.SW, im Beispiel 80 °C.

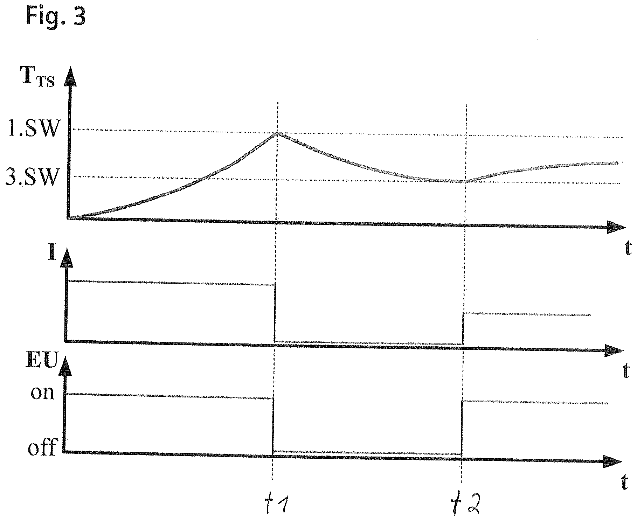

Figur 3 zeigt eine Darstellung gemäß Figur 2, mit dem Unterschied, dass drei, miteinander korrelierte Diagramme dargestellt sind, wobei auf der horizontalen Achse (Abszisse) die Zeit t aufgetragen ist.

Im oberen Bereich von Figur 3 ist die Höhe der Temperatur $T_{TS}$ des (ausgewählten) Temperatursensors in Abhängigkeit von der Zeit t aufgetragen. Der erste Temperaturschwellwert 1.SW und der dritte Temperaturschwellwertes 3.SW sind eingezeichnet.

Im mittleren Bereich von Figur 3 ist die Höhe des Stromes I in Abhängigkeit von der Zeit t aufgetragen.

Im unteren Bereich von Figur 3 ist der Schaltzustand der elektronischen Unterbrechungseinheit EU in Abhängigkeit von der Zeit t aufgetragen. Ein niederohmiger Zustand der elektronischen Unterbrechungseinheit EU ist mit on gekennzeichnet. Ein hochohmiger Zustand der elektronischen Unterbrechungseinheit EU ist mit off gekennzeichnet.

Es fließt beispielsweise ein (konstanter) Strom I bzw. ein Strom I mit einem konstanten Effektivwert einer ersten Höhe für eine gewisse Zeit (Figur 3 mitte). Es tritt eine entsprechende Erwärmung an der Anschlussklemme auf. Die Temperatur / die ermittelte Höhe der Temperatur $T_{TS}$ des Temperatursensors steigt, bis zum ersten Zeitpunkt t1 der erste Temperaturschwellwert 1.SW erreicht ist (Figur 3 oben).

Bei Erreichen bzw. Überschreitung des ersten Temperaturschwellwertes 1.SW, im Beispiel 100 °C, wird die elektronischen Unterbrechungseinheit EU in einen hochohmigen Zustand off (der Schaltelemente) zur Vermeidung eines Stromflusses geschaltet, erster Zeitpunkt t1 (Figur 3 unten). So wird eine weitere Erwärmung und Überhitzung (und damit verbundene Beschädigung) der Anschlussklemmen vermieden.

Das Schutzschaltgerät und die Anschlussklemme kann abkühlen. Zu einem zweiten Zeitpunkt t2 wird der dritte Temperaturschwellwert 3.SW, im Beispiel 80 °C, erreicht bzw. unterschritten. Bei Erreichen bzw. Unterschreitung des dritten Temperaturschwellwertes 3.SW wird die elektronische Unterbrechungseinheit (wieder) (zum zweiten Zeitpunkt t2) in einen niederohmigen Zustand on (für einen Stromfluss im Niederspannungsstromkreis) geschaltet (Figur 3 unten). Der Strom I kann (ab dem zweiten Zeitpunkt t2) wieder fließen (Figur 3 mitte). Ggfs kann die Temperatur wieder steigen (Figur 3 oben).

Der dritte Temperaturschwellwert ist kleiner als der erste Temperaturschwellwert.

Alternativ oder zusätzlich kann an Stelle des dritten Temperaturschwellwertes 3.SW der Ablauf einer ersten Zeitspanne seit Eintreten des hochohmigen Zustandes der Schaltelemente abgewartet werden. Nach Ablauf einer ersten Zeitspanne seit Eintreten des hochohmigen Zustandes der elektronischen Unterbrechungseinheit wird die elektronische Unterbrechungseinheit in den niederohmigen Zustand geschaltet (nicht dargestellt).

Erfolgt der Wechsel zwischen hochohmigen Zustand zur Vermeidung der Überhitzung und zurück in den niederohmigen Zustand zu häufig, wird der mindestens eine Kontakt der mechanischen Trennkontakteinheit MK geöffnet. D.h. dass bei einem eine erste Anzahl überschreitenden Wechseln (Toggeln) zwischen hochohmigen Zustand zur Vermeidung der Überhitzung und zurück in den niederohmigen Zustand innerhalb eines ersten Zeitrahmens der mindestens eine Kontakt der mechanischen Trennkontakteinheit MK geöffnet wird.

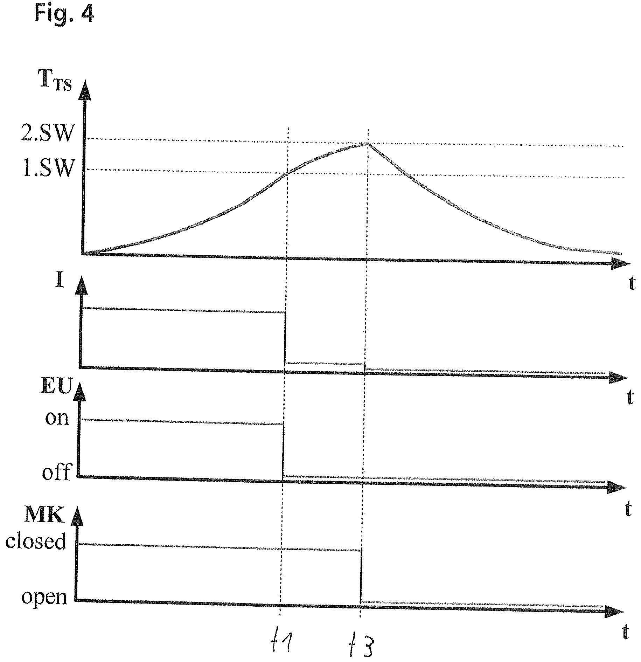

Figur 4 zeigt eine Darstellung gemäß Figur 3, mit dem Unterschied, dass ein viertes Diagramm dargestellt ist, dass mit den drei oberen Diagrammen korreliert ist.

Das vierte Diagramm zeigt im untersten Bereich von Figur 4 den Schaltzustand der mechanischen Trennkontakteinheit MK in Abhängigkeit von der Zeit t. Ein geschlossener Zustand des mindestens einen Kontaktes der mechanischen Trennkontakteinheit MK ist mit closed gekennzeichnet. Ein offener Zustand des mindestens einen Kontaktes der mechanischen Trennkontakteinheit MK ist mit open gekennzeichnet.

Ferner ist oberen Bereich von Figur 4 der erste Temperaturschwellwert 1.SW und der zweite Temperaturschwellwertes 2.SW eingezeichnet.

Es fließt beispielsweise ein (konstanter) Strom I einer ersten Höhe für eine gewisse Zeit (Figur 4 mitte). Es tritt eine entsprechende Erwärmung an der Anschlussklemme auf. Die Temperatur im Schutzschaltgerät / die ermittelte Höhe der Temperatur $T_{TS}$ des Temperatursensors steigt, bis zum ersten Zeitpunkt t1 der erste Temperaturschwellwert 1.SW erreicht ist (Figur 4 oben).

Bei Erreichen bzw. Überschreitung des ersten Temperaturschwellwertes 1.SW, im Beispiel 100 °C, wird die elektronischen Unterbrechungseinheit EU in einen hochohmigen Zustand off (der Schaltelemente) zur Vermeidung eines Stromflusses geschaltet, erster Zeitpunkt t1 (Figur 4 unten).

Der Strom wird reduziert (Figur 4 mitte).

Steigt nun trotz hochohmig geschalteter elektronischer Unterbrechungseinheit EU die Temperatur weiter an, beispielsweise weil die elektronischen Unterbrechungseinheit EU defekt ist (d.h. der hochohmige Zustand ist initiiert, aber beispielsweise nicht oder nicht vollständig wirksam) und ein (geringerer) Strom fließt, so wird bei Erreichen bzw. Überschreitung des zweiten Temperaturschwellwertes 2.SW, im Beispiel 110 °C, der mindestens eine Kontakt der mechanischen Trennkontakteinheit MK geöffnet (Figur 4 unterst), dritter Zeitpunkt t3.

Der zweite Temperaturschwellwertes 2.SW ist höher als der erste Temperaturschwellwertes 1.SW.

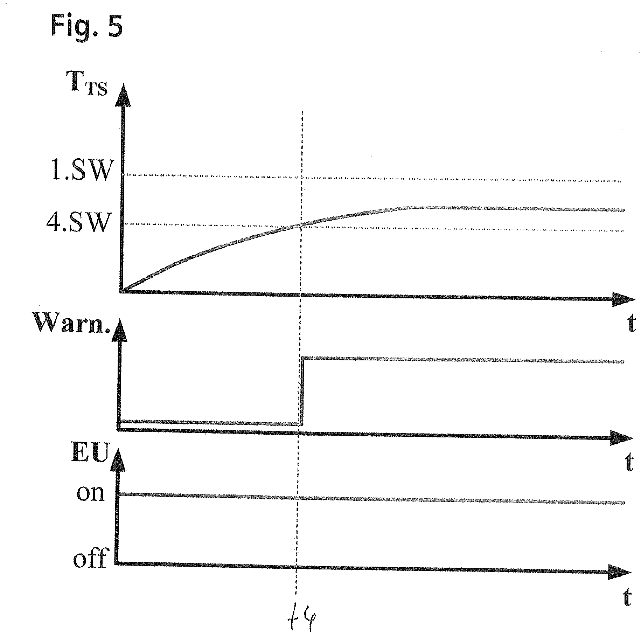

Figur 5 zeigt eine Darstellung gemäß Figur 3, mit dem Unterschied, dass im mittleren Bereich von Figur 5 die Abgabe einer Warnung Warn. in Abhängigkeit von der Zeit t dargestellt ist.

Ferner ist oberen Bereich von Figur 5 der erste Temperaturschwellwert 1.SW und der vierte Temperaturschwellwertes 4.SW dargestellt. Bei Überschreitung des vierten Temperaturschwellwertes zum vierten Zeitpunkt t4 wird eine Warnung Warn. (leitungslos / leitungsgebunden) mittels der Kommunikationseinheit COM abgegeben. Beispielsweise zu einem übergeordnetem Managementsystem. Alternativ oder zusätzlich kann diese angezeigt werden, beispielsweise mit der Anzeigeeinheit AE. Der vierte Temperaturschwellwert ist kleiner als der erste Temperaturschwellwert.

Die elektronische Unterbrechungseinheit EU bleibt im niederohmigen Zustand on.

Alternativ oder zusätzlich kann die Höhe der Temperatur (leitungslos / leitungsgebunden) mittels der Kommunikationseinheit COM abgegeben werden. Beispielsweise zu einem übergeordnetem Managementsystem. Alternativ oder zusätzlich kann die Höhe der Temperatur angezeigt werden, beispielsweise mit der Anzeigeeinheit AE.

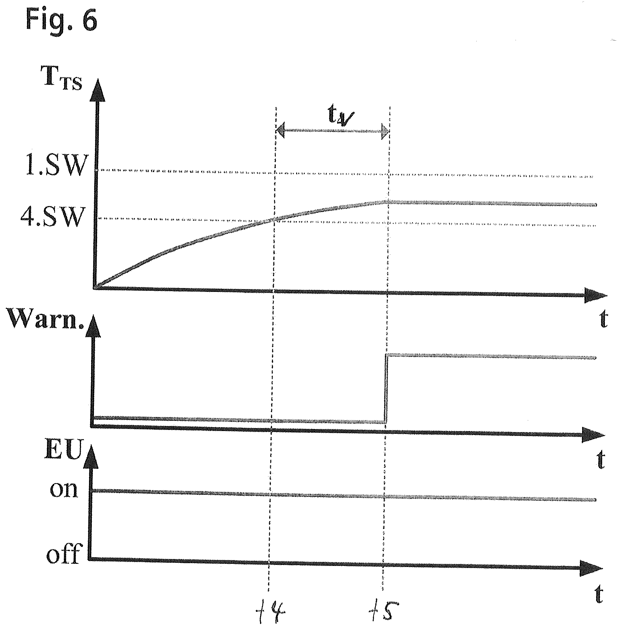

Figur 6 zeigt eine Darstellung gemäß Figur 5, mit dem Unterschied, dass die Warnung Warn. mit einem zeitlichen Versatz (zeitlichen Verzug) $t_V$ abgegeben wird. D.h. bei Überschreitung des vierten Temperaturschwellwertes 4.SW zum vierten Zeitpunkt t4 wird keine Warnung Warn. Abgegeben, sondern die Warnung Warn. wird erst zu einem fünften Zeitpunkt t5 abgegeben, wie in Figur 6 eingezeichnet. So können beispielsweise Warnungen vermieden werden, die auf kurzzeitigen Erwärmungen auf Grund von kurzzeitig erhöhten Anlauf- oder Schaltströmen beruhen. Ist vor dem Erreichen des fünften Zeitpunktes t5 die Temperatur $T_{TS}$ wieder unterhalb des vierten Temperaturschwellwertes 4.SW gesunken, wird keine Warnung Warn. abgegeben.

Der zeitliche Versatz (zeitlichen Verzug) $t_V$ liegt im Bereich ab einer Sekunde, ..., 5 Sekunden, ... 10 Sekunden, ... 1 Minute.

Im Folgenden wird die Erfindung mit anderen Worten nochmals erläutert.

In einer elektrischen (Unter-)Verteilungen befinden sich eine Vielzahl von verschiedenen Schutz- und Schaltgeräte, die über entsprechende Leitungen miteinander verbunden werden. Bei der Auslegung einer solchen Unterverteilung müssen auch thermische Betrachtungen und Berechnungen durchgeführt werden, da aufgrund von ohmschen Verlusten auf den Leitungen und den elektrischen Betriebsmitteln Verluste in der Unterverteilung entstehen. Die Unterverteilung wird hierdurch erwärmt. Einer thermischen Überlastung wird heute durch eine entsprechende (Über-)Dimensionierung (nach Norm, Richtlinien oder Vorschriften) verhindert.

Neben den o.g. thermischen Auslegungen einer elektrischen Unterverteilung führen die elektrischen Anschlussstellen (Anschlussklemmen) öfters zu thermischen Überlastungen und Bränden. Diese können aufgrund einer fehlerhaften Inbetriebnahme (Verschmutzung, falsche Anzugsmomente bei Schraubklemmen, Lockere Anschlussklemme) oder aber auch aufgrund von Alterung (Korrosion) auftreten.

Heutzutage werden laut Errichter-Bestimmung und vom Versicherer Sichtprüfungen von Elektrofachkräften vorgeschrieben. Hierbei wird aber möglicherweise nicht jede fehlerhafte Klemmstelle gefunden.

Erfindungsgemäß wird eine Temperaturmessung an (ausgewählten / den) Anschlussklemmen des Schutzschaltgerätes implementiert. Die Temperaturmessungen und die weiteren Geräte-Komponenten sind mit der Steuerungseinheit verbunden, sodass hier ein entsprechender Algorithmus das Gerät ausschalten kann, bevor eine gefährliche Temperatur an den Anschlussstellen / Anschlussklemmen entsteht, um so das Gerät / die Unterverteilung vor einem gefährlichen Brand zu schützen.

Neuartige elektronische Schutz- und Schaltgeräte verwenden im Hauptstrompfad elektronische Schaltelemente (Leistungshalbleiter). Wird eine kritische Temperatur erreicht, wird ein hochohmiger Zustand initiiert. So kann kein Strom mehr durch das Schutzschaltgerät und über die Anschlussklemme fließen und die Anschlussklemme (und die Unterverteilung) abkühlen. Des Weiteren kann eine entsprechende Meldung zur Warnung abgegeben werden.

Da kein Strom mehr durch das Gerät fließt, kühlt die Anschlussklemme und das Gerät wieder ab. Nachdem eine gewisse Temperatur unterschritten wurde, kann das Gerät automatisch wieder in den niederohmigen Zustand für einen Stromfluss wechseln (Hysterese).

Je nach Geräte-Konfiguration kann auch anstelle des niederohmigen Zustandes eine Öffnung der Kontakte der mechanischen Trennkontakteinheit initiiert werden. Ein automatisches Wiedereinschalten nach einer Abkühlung ist dann nicht möglich. Ein Manuelles wieder Schließen der Kontakte ist nötig.

Obwohl die Erfindung im Detail durch das Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1.  Schutzschaltgerät (SG) zum Schutz eines elektrischen Niederspannungsstromkreises aufweisend:

    - ein Gehäuse (GEH) mit mindestens zwei netzseitigen Anschlüssen und mindestens einem lastseitigen Anschluss,
    - dass die netzseitigen Anschlüsse und der mindestens eine lastseitige Anschluss jeweils Anschlussklemmen aufweisen, zum Anschluss von externen Leitern des zu schützenden Niederspannungsstromkreises an das Schutzschaltgerät,
    - eine mechanische Trennkontakteinheit (MK), die in Serie mit einer elektronischen Unterbrechungseinheit (EU) geschaltet ist, wobei die Serienschaltung einerseits mit einem der mindestens zwei netzseitigen und andererseits mit dem mindestens einem lastseitigen Anschluss verbunden ist,
    - dass die mechanische Trennkontakteinheit (MK) durch ein Öffnen von mindestens einem Kontakt zur Vermeidung eines Stromflusses oder ein Schließen des mindestens einen Kontaktes für einen Stromfluss im Niederspannungsstromkreis schaltbar ist,
    - dass die elektronische Unterbrechungseinheit (EU) durch halbleiterbasierte Schaltelemente in einen hochohmigen Zustand der Schaltelemente zur Vermeidung eines Stromflusses oder einen niederohmigen Zustand der Schaltelemente zum Stromfluss im Niederspannungsstromkreis schaltbar ist,
    - einer Stromsensoreinheit (SI), zur Ermittlung der Höhe des Stromes des Niederspannungsstromkreises,
    - einer Steuerungseinheit (SE), die mit der Stromsensoreinheit (SI), der mechanischen Trennkontakteinheit (MK) und der elektronischen Unterbrechungseinheit (EU) verbunden ist, wobei bei Überschreitung der ermittelten Höhe des Stromes über Strom- oder/und Strom-Zeitgrenzwerten eine Vermeidung eines Stromflusses des Niederspannungsstromkreises initiiert wird,
    - dass mindestens ein mit der Steuerungseinheit verbundener Temperatursensor vorgesehen ist, zur Ermittlung der Höhe der Temperatur,
    - dass der mindestens eine Temperatursensor bei oder im Bereich einer Anschlussklemme vorgesehen ist,
    - dass das Schutzschaltgerät derart ausgestaltet ist,

    dass bei Überschreitung der Höhe der Temperatur über einen ersten Temperaturschwellwertes (1.SW) die elektronische Unterbrechungseinheit (EU) in einen hochohmigen Zustand der Schaltelemente zur Vermeidung eines Stromflusses geschaltet wird, um eine Überhitzung der Anschlussklemme zu vermeiden.

2.  Schutzschaltgerät (SG) nach Patentanspruch 1,
    **dadurch gekennzeichnet,**
    **dass** die mechanische Trennkontakteinheit (MK) dem lastseitigen Anschluss und die elektronische Unterbrechungseinheit (EU) dem netzseitigen Anschluss zugeordnet ist.

3.  Schutzschaltgerät (SG) nach Patentanspruch 1 oder 2, **dadurch gekennzeichnet,**
    **dass** zwei netzseitige Anschlüsse und zwei lastseitige Anschlüsse vorgesehen sind.

4.  Schutzschaltgerät (SG) nach einem der vorhergehenden Patentansprüche,
    **dadurch gekennzeichnet,**
    **dass** bei einem initiierten hochohmigen Zustand der Schaltelemente der elektronischen Unterbrechungseinheit (EU) zur Vermeidung der Überhitzung und bei Überschreitung eines höheren zweiten Temperaturschwellwertes (2.SW) der mindestens eine Kontakt der mechanischen Trennkontakteinheit (MK) geöffnet wird.

5.  Schutzschaltgerät (SG) nach einem der vorhergehenden Patentansprüche,
    **dadurch gekennzeichnet,**
    **dass** bei einem hochohmigen Zustand der Schaltelemente der elektronischen Unterbrechungseinheit (EU) zur Vermeidung der Überhitzung und Unterschreitung eines dritten Temperaturschwellwertes (3.SW) die elektronische Unterbrechungseinheit (EU) in einen niederohmigen Zustand geschaltet wird.

6. Schutzschaltgerät (SG) nach einem der vorhergehenden Patentansprüche,
**dadurch gekennzeichnet,**
**dass** der dritte Temperaturschwellwert kleiner als der erste Temperaturschwellwert ist.

7. Schutzschaltgerät (SG) nach einem der vorhergehenden Patentansprüche 1 bis 4,
**dadurch gekennzeichnet,**
**dass** bei einem hochohmigen Zustand der Schaltelemente zur Vermeidung der Überhitzung und Ablauf einer ersten Zeitspanne seit Eintreten des hochohmigen Zustandes der Schaltelemente zur Vermeidung der Überhitzung die elektronische Unterbrechungseinheit in den niederohmigen Zustand geschaltet wird.

8. Schutzschaltgerät (SG) nach einem der vorhergehenden Patentansprüche,
**dadurch gekennzeichnet,**
**dass** bei einem eine erste Anzahl überschreitenden Wechsel in den hochohmigen Zustand zur Vermeidung der Überhitzung innerhalb eines ersten Zeitrahmens der mindestens eine Kontakt der mechanischen Trennkontakteinheit (MK) geöffnet wird.

9. Schutzschaltgerät (SG) nach einem der vorhergehenden Patentansprüche,
**dadurch gekennzeichnet,**
**dass** eine mit der Steuerungseinheit (SE) verbundene Kommunikationseinheit (COM) vorgesehen ist.

10. Schutzschaltgerät (SG) nach Patentanspruch 9,
**dadurch gekennzeichnet,**
**dass** bei Überschreitung eines vierten Temperaturschwellwertes (4.SW) eine Warnung mittels der Kommunikationseinheit (COM) abgegeben wird.

11. Schutzschaltgerät (SG) nach Patentanspruch 9 oder 10,
**dadurch gekennzeichnet,**
**dass** mittels der Kommunikationseinheit (COM) die Höhe der Temperatur ($T_{TS}$) des Temperatursensors oder ein Äquivalent abgegeben wird.

12. Schutzschaltgerät (SG) nach einem der vorhergehenden Patentansprüche,
**dadurch gekennzeichnet,**
**dass** der mindestens eine Kontakt der mechanischen Trennkontakteinheit (MK) durch die Steuerungseinheit (SE) geöffnet, aber nicht geschlossen werden kann.

13. Schutzschaltgerät (SG) nach einem der vorhergehenden Patentansprüche,
**dadurch gekennzeichnet,**
**dass** die mechanische Trennkontakteinheit (MK) durch eine mechanische Handhabe (HH) bedienbar ist, um ein Öffnen des mindestens einen Kontaktes oder ein Schließen des mindestens einen Kontaktes zu schalten.

14. Schutzschaltgerät (SG) nach Patentanspruch 13,
**dadurch gekennzeichnet,**
**dass** der mindestens eine Kontakt der mechanischen Trennkontakteinheit (MK) eine Freischaltfunktionalität aufweist, derart das der mindestens eine Kontakt durch die Steuerungseinheit (SE) geöffnet wird, auch wenn die mechanische Handhabe (HH) blockiert ist.

15. Schutzschaltgerät (SG) nach einem der vorhergehenden Patentansprüche,
**dadurch gekennzeichnet,**
**dass** für die netzseitigen Anschlussklemmen mindestens ein netzseitiger Temperatursensor vorgesehen ist, für die Ermittlung der Höhe der Temperatur der netzseitigen Anschlussklemmen.

16. Schutzschaltgerät (SG) nach einem der vorhergehenden Patentansprüche,
**dadurch gekennzeichnet,**
**dass** für die mindestens eine lastseitige Anschlussklemme mindestens ein lastseitiger Temperatursensor vorgesehen ist, für die Ermittlung der Höhe der Temperatur der mindestens einen lastseitigen Anschlussklemme.

17. Schutzschaltgerät (SG) nach einem der vorhergehenden Patentansprüche,
**dadurch gekennzeichnet,**

**dass** pro Anschlussklemme, insbesondere der stromführenden Leiter des Niederspannungsstromkreises, jeweils ein Temperatursensor vorgesehen ist, für die Ermittlung der Höhe der Temperatur der jeweiligen Anschlussklemme.

18. Verfahren für ein Schutzschaltgerät (SG) zum Schutz eines elektrischen Niederspannungsstromkreises aufweisend:

- ein Gehäuse (GEH) mit mindestens zwei netzseitigen Anschlüssen und mindestens einem lastseitigen Anschluss,
- dass die netzseitigen Anschlüsse und der mindestens eine lastseitige Anschluss jeweils Anschlussklemmen aufweist, zum Anschluss von externen Leitern des zu schützenden Niederspannungsstromkreises an das Schutzschaltgerät,
- eine mechanische Trennkontakteinheit (MK), die in Serie mit einer elektronischen Unterbrechungseinheit (EU) geschaltet ist, wobei die Serienschaltung einerseits mit mindestens einem netzseitigen und andererseits mit dem mindestens einem lastseitigen Anschluss verbunden ist,
- dass die mechanische Trennkontakteinheit (MK) durch ein Öffnen von mindestens einem Kontakt zur Vermeidung eines Stromflusses oder ein Schließen des mindestens einen Kontaktes für einen Stromfluss im Niederspannungsstromkreis schaltbar ist,
- dass die elektronische Unterbrechungseinheit (EU) durch halbleiterbasierte Schaltelemente in einen hochohmigen Zustand der Schaltelemente zur Vermeidung eines Stromflusses oder einen niederohmigen Zustand der Schaltelemente zum Stromfluss im Niederspannungsstromkreis schaltbar ist,
- dass die Höhe des Stromes (I) des Niederspannungsstromkreises ermittelt wird,
- dass bei Überschreitung von Strom- oder/und Strom-Zeitgrenzwerten eine Vermeidung eines Stromflusses des Niederspannungsstromkreises initiiert wird,
- dass die Höhe der Temperatur ($T_{TS}$) bei oder im Bereich mindestens einer Anschlussklemme ermittelt wird,
- dass bei Überschreitung der Höhe der Temperatur ($T_{TS}$) über einen ersten Temperaturschwellwertes (1.SW) die elektronische Unterbrechungseinheit (EU) in einen hochohmigen Zustand der Schaltelemente zur Vermeidung eines Stromflusses geschaltet wird, um eine Überhitzung der Anschlussklemme zu vermeiden.

19. Verfahren nach Patentanspruch 18,
**dadurch gekennzeichnet,**
**dass** bei einem initiierten hochohmigen Zustand der Schaltelemente zur Vermeidung der Überhitzung und bei Überschreitung eines höheren zweiten Temperaturschwellwertes (2.SW) der mindestens eine Kontakt der mechanischen Trennkontakteinheit (MK) geöffnet wird.

20. Verfahren nach Patentanspruch 18 oder 19,
**dadurch gekennzeichnet,**

**dass** bei einem hochohmigen Zustand der Schaltelemente zur Vermeidung der Überhitzung und Unterschreitung eines dritten Temperaturschwellwertes (3.SW) die elektronische Unterbrechungseinheit (EU) in einen niederohmigen Zustand geschaltet wird,
insbesondere dass der dritte Temperaturschwellwert (3.SW) kleiner als der erste Temperaturschwellwert (1.SW) ist

21. Verfahren nach Patentanspruch 18 oder 19,
**dadurch gekennzeichnet,**
**dass** bei einem hochohmigen Zustand der Schaltelemente zur Vermeidung der Überhitzung und Ablauf einer ersten Zeitspanne seit Eintreten des hochohmigen Zustandes der Schaltelemente zur Vermeidung der Überhitzung die elektronische Unterbrechungseinheit in den niederohmigen Zustand geschaltet wird.

22. Verfahren nach Patentanspruch 18, 19, 20 oder 21,
**dadurch gekennzeichnet,**
**dass** bei einem eine erste Anzahl überschreitenden Wechsel in den hochohmigen Zustand zur Vermeidung der Überhitzung innerhalb eines ersten Zeitrahmens der mindestens eine Kontakt der mechanischen Trennkontakteinheit (MK) geöffnet wird.

23. Verfahren nach Patentanspruch 18, 19, 20, 21 oder 22,
**dadurch gekennzeichnet,**
**dass** bei Überschreitung eines vierten Temperaturschwellwertes (4.SW) eine Warnung (Warn.) abgegeben wird.

24. Verfahren nach Patentanspruch 18, 19, 20, 21, 22 oder 23,
    **dadurch gekennzeichnet,**
    **dass** die Höhe der Temperatur ($T_{TS}$) oder ein Äquivalent abgegeben wird.

Fig. 1 A

Fig. 1 B

Fig. 2

Fig. 3

Fig. 4

Fig. 5

Fig. 6

Europäisches
Patentamt

European
Patent Office

Office européen
des brevets

**EUROPÄISCHER RECHERCHENBERICHT**

Nummer der Anmeldung

EP 23 20 0444

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2021/066013 A1 (KUMAR BINESH [US] ET AL) 4. März 2021 (2021-03-04) | 1,3,5-7, 9-18,20, 21,23,24 | INV. H02H3/08 H01H9/54 |
| A | * das ganze Dokument * | 4,8,19, 22 | H01H9/56 H02H5/04 H02H7/22 |
| Y | CN 114 660 338 A (WORK TEAM ELECTRIC APPLIANCE LTD COMPANY) 24. Juni 2022 (2022-06-24) | 1-3,5-7, 9-18,20, 21,23,24 | |
| A | * das ganze Dokument * | 4,8,19, 22 | |
| Y | DE 10 2021 210820 A1 (SIEMENS AG [DE]) 30. März 2023 (2023-03-30) | 1-3,5-7, 9-17,23, 24 | |
| A | * das ganze Dokument * | 4,8,19, 22 | |
| A | US 2017/256934 A1 (KENNEDY RYAN [US] ET AL) 7. September 2017 (2017-09-07) * das ganze Dokument * | 1-11, 15-24 | |
| A | WO 2022/136431 A1 (SIEMENS AG [DE]) 30. Juni 2022 (2022-06-30) * das ganze Dokument * | 1-11, 15-24 | RECHERCHIERTE SACHGEBIETE (IPC) G01R H02H H01H |
| A | US 2013/300491 A1 (BOE OVE [NO] ET AL) 14. November 2013 (2013-11-14) * das ganze Dokument * | 1-11, 15-24 | |
| Y | DE 10 2021 210821 A1 (SIEMENS AG [DE]) 30. März 2023 (2023-03-30) * Absätze [0013], [0014] * | 12-14 | |
| Y | DE 10 2021 210814 A1 (SIEMENS AG [DE]) 30. März 2023 (2023-03-30) * Absätze [0010], [0028], [0030] * | 12-14 | |

-/--

Der vorliegende Recherchenbericht wurde für alle Patentansprüche erstellt

| Recherchenort | Abschlußdatum der Recherche | Prüfer |
|---|---|---|
| München | 13. Juli 2024 | Trifonov, Antoniy |

EPO FORM 1503 03.82 (P04C03)

**Europäisches Patentamt**
**European Patent Office**
**Office européen des brevets**

# EUROPÄISCHER RECHERCHENBERICHT

**Nummer der Anmeldung**

EP 23 20 0444

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 10 2021 210815 A1 (SIEMENS AG [DE]) 30. März 2023 (2023-03-30) * Absätze [0056], [0059], [0065] * - - - - - | 12-14 | |
| X | DE 10 2021 210816 A1 (SIEMENS AG [DE]) 30. März 2023 (2023-03-30) * das ganze Dokument * - - - - - | 1,3,4,9, 12-14,19 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 13. Juli 2024 | Trifonov, Antoniy |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

Europäisches
Patentamt

European
Patent Office

Office européen
des brevets

**Nummer der Anmeldung**

EP 23 20 0444

---

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

---

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

```
Siehe Ergänzungsblatt B
```

☒ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt

European
Patent Office

Office européen
des brevets

**MANGELNDE EINHEITLICHKEIT
DER ERFINDUNG
ERGÄNZUNGSBLATT B**

**Nummer der Anmeldung**

EP 23 20 0444

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-11, 15-24

   Schutzgerät und Verfahren zur Vermeidung von Überhitzung und
   Feuer am Anschlussklemmen
                     - - -

2. Ansprüche: 12-14

   Schutzgerät mit Freischaltfunktionalität
                     - - -

**ANHANG ZUM EUROPÄISCHEN RECHERCHENBERICHT
ÜBER DIE EUROPÄISCHE PATENTANMELDUNG NR.**          EP 23 20 0444

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-07-2024

| Im Recherchenbericht angeführtes Patentdokument | Datum der Veröffentlichung | Mitglied(er) der Patentfamilie | | Datum der Veröffentlichung |
|---|---|---|---|---|
| US 2021066013 A1 | 04-03-2021 | CN | 114342200 A | 12-04-2022 |
| | | EP | 4026213 A1 | 13-07-2022 |
| | | JP | 2022547639 A | 14-11-2022 |
| | | KR | 20220058919 A | 10-05-2022 |
| | | US | 2021066013 A1 | 04-03-2021 |
| | | US | 2022165528 A1 | 26-05-2022 |
| | | WO | 2021046097 A1 | 11-03-2021 |
| CN 114660338 A | 24-06-2022 | KEINE | | |
| DE 102021210820 A1 | 30-03-2023 | CN | 118020134 A | 10-05-2024 |
| | | DE | 102021210820 A1 | 30-03-2023 |
| | | EP | 4377988 A1 | 05-06-2024 |
| | | WO | 2023052147 A1 | 06-04-2023 |
| US 2017256934 A1 | 07-09-2017 | CN | 108885951 A | 23-11-2018 |
| | | CN | 112366104 A | 12-02-2021 |
| | | EP | 3424066 A1 | 09-01-2019 |
| | | EP | 3770936 A1 | 27-01-2021 |
| | | ES | 2848651 T3 | 11-08-2021 |
| | | US | 2017256934 A1 | 07-09-2017 |
| | | US | 2020083699 A1 | 12-03-2020 |
| | | WO | 2017151521 A1 | 08-09-2017 |
| WO 2022136431 A1 | 30-06-2022 | EP | 4238117 A1 | 06-09-2023 |
| | | US | 2024047958 A1 | 08-02-2024 |
| | | WO | 2022136431 A1 | 30-06-2022 |
| US 2013300491 A1 | 14-11-2013 | BR | 112013006956 A2 | 26-07-2016 |
| | | EP | 2567391 A1 | 13-03-2013 |
| | | US | 2013300491 A1 | 14-11-2013 |
| | | WO | 2012038237 A1 | 29-03-2012 |
| DE 102021210821 A1 | 30-03-2023 | CN | 118020135 A | 10-05-2024 |
| | | DE | 102021210821 A1 | 30-03-2023 |
| | | EP | 4356412 A1 | 24-04-2024 |
| | | WO | 2023052107 A1 | 06-04-2023 |
| DE 102021210814 A1 | 30-03-2023 | CN | 118043923 A | 14-05-2024 |
| | | DE | 102021210814 A1 | 30-03-2023 |
| | | EP | 4367701 A1 | 15-05-2024 |
| | | WO | 2023052108 A1 | 06-04-2023 |
| DE 102021210815 A1 | 30-03-2023 | CN | 118043922 A | 14-05-2024 |
| | | DE | 102021210815 A1 | 30-03-2023 |
| | | EP | 4367700 A1 | 15-05-2024 |

EPO FORM P0461

Für nähere Einzelheiten zu diesem Anhang : siehe Amtsblatt des Europäischen Patentamts, Nr.12/82

## ANHANG ZUM EUROPÄISCHEN RECHERCHENBERICHT
## ÜBER DIE EUROPÄISCHE PATENTANMELDUNG NR.

EP 23 20 0444

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-07-2024

| Im Recherchenbericht angeführtes Patentdokument | Datum der Veröffentlichung | Mitglied(er) der Patentfamilie | | Datum der Veröffentlichung |
|---|---|---|---|---|
| | | WO | 2023052081 A1 | 06-04-2023 |
| DE 102021210816 A1 | 30-03-2023 | CN | 118020128 A | 10-05-2024 |
| | | DE | 102021210816 A1 | 30-03-2023 |
| | | EP | 4377986 A1 | 05-06-2024 |
| | | WO | 2023052148 A1 | 06-04-2023 |

EPO FORM P0461

Für nähere Einzelheiten zu diesem Anhang : siehe Amtsblatt des Europäischen Patentamts, Nr.12/82